# EUROPÄISCHE PATENTSCHRIFT

(11) **EP 2 908 172 B1**
(45) Veröffentlichungstag und Bekanntmachung des Hinweises auf die Patenterteilung: **22.05.2019**
(21) Anmeldenummer: 15154712.2
(22) Anmeldetag: 11.02.2015
(51) Int. Cl.: G03B 5/06, G03B 5/02, G02B 7/00, G02B 13/16

(54) **Bilderfassungsvorrichtung mit parallelkinematischer Bewegungseinrichtung**
Image capturing device having parallel kinematic movement device
Dispositif d'enregistrement d'images doté d'un dispositif de déplacement de cinématique parallèle

(30) Priorität: 12.02.2014 DE 102014202541
(43) Veröffentlichungstag der Anmeldung: 19.08.2015
(73) Patentinhaber: Jenner, Oliver, 65933 Frankfurt (DE)
(72) Erfinder: Jenner, Oliver, 65933 Frankfurt (DE)
(74) Vertreter: Müller Hoffmann & Partner

(56) Entgegenhaltungen:
- EP-A1- 1 676 776
- EP-A1- 2 842 511
- DE-U1- 20 000 242
- FR-A1- 2 977 649
- JP-A- 2004 118 171
- US-A1- 2012 062 781
- US-B2- 8 521 411

## Beschreibung

Die Erfindung betrifft eine Bilderfassungsvorrichtung, insbesondere fotografische Kamera, umfassend: wenigstens eine Bildwandlervorrichtung, die eine Bildebene festlegt, und wenigstens eine Objektiveinrichtung, die eine Objektivebene festlegt, wobei die Bildwandlervorrichtung und die Objektiveinrichtung relativ zueinander beweglich angeordnet sind; wenigstens eine der Bildwandlervorrichtung zugeordnete wandlerseitige Trägeranordnung; wenigstens eine der Objektiveinrichtung zugeordnete objektivseitige Trägeranordnung; wenigstens eine parallelkinematische Bewegungseinrichtung mit mehreren Streben, die mit ihren jeweiligen Strebenenden gelenkig an der wandlerseitigen Trägeranordnung oder/und an der objektivseitigen Trägeranordnung oder/und an einem Grundrahmen der Bilderfassungsvorrichtung angeordnet sind, wobei mittels der Bewegungseinrichtung translatorische Bewegungen entlang einer Strebenbezugsachse ausführbar sind,
wobei in einer Grundstellung die Bildebene und die Objektivebene parallel zueinander positioniert sind, so dass eine optische Achse orthogonal zur Bildebene und zur Objektivebene verläuft,

Derartige Bilderfassungseinrichtungen bzw. Kameras sind als Fachkamera, Universalkamera oder auch Präzisionskamera bekannt. Sie erlauben eine exakte und wiederholbare Verstellung der Bildwandlervorrichtung und der Objektiveinrichtung. Die Funktion der Kamera erlaubt die Parallelverschiebung der Bild- und Objektivebenen in horizontaler und vertikaler Richtung, die Verschwenkung in horizontaler und vertikaler Richtung sowie Kombinationen hieraus, mit dem Ziel der Korrektur perspektivischer Verzeichnung von Gegenständen und der Festlegung eines individuellen Verlaufs der Schärfenebene innerhalb einer fotografischen Aufnahme.

Eine derartige Bilderfassungsvorrichtung ist beispielsweise aus der DE 200 00 242 U1 bekannt. Die Kamera umfasst ein Objektiv mit Objektivträger und einen Bildwandler mit Bildwandlerträger. Dabei sind die Endpunkte der Streben über Gelenke mit den beiden Trägern verbunden. Die Gelenke sind an den Trägern in einer Ebene und so zueinander angeordnet, das ein Endpunkt einer jeden Strebe mit der Ebene des Objektivträgers und der andere Endpunkt einer jeden Strebe in der Ebene des Bildwandlerträgers verbunden ist, sodass die Streben eine geschlossene kinematische Kette bilden.

Eine weitere Bilderfassungsvorrichtung der genannten Art ist ferner aus der WO 2012/031637 bekannt.

Die Streben sind bei beiden bekannten Kameras mit ihrem ersten Gelenk an dem Objektivträger entlang eines Kreises in der Objektivträger-Ebene angeordnet und mit ihrem zweiten Gelenk entlang eines Kreises in der Bildwandlerträger-Ebene angeordnet. Objektiv- und Bildwandlerträger sind somit in drei translatorische und drei rotatorische Richtungen relativ zueinander beweglich und ermöglichen die Parallelverschiebung und Verschwenkung von Objektiv und Bildwandler. Die Streben sind in Form von längenveränderlichen Linearaktuatoren ausgebildet. Durch die kreisförmige Anordnung und durch die Wirkrichtung der sechs Streben an den beiden Trägern ergibt sich eine Strahlendurchtrittsöffnung für Objektiv und Bildwandler, die beide in den gedachten Bezugsmittelpunkten der Träger angeordnet sind. Die von Objektiv und Bildwandler gebildete optische Achse und die sich aus den Bezugsmittelpunkten der Träger ergebende Strebenbezugsachse sind daher annähernd deckungsgleich.

Durch die zentrische Anordnung des Objektivs und des Bildwandlers innerhalb der Strebenanordnung ist die Größe von Objektiv und Bildwandelträger vorgegeben und auf die inneren Dimensionierungen der Träger-Streben-Struktur begrenzt. Es existiert somit auch ein Beschränkung des maximal nutzbaren Durchmessers der Strahlendurchtrittsöffnung vom Objektiv zum Bildwandler aufgrund der Streben, welche die optische Achse umgeben. Ferner ist durch die Wirkrichtung der Streben entlang der koinzidenten optischen Achse ein minimaler Abstand zwischen Objektiv und Bildwandler durch die bauartbedingte minimal erreichbare Länge der Streben vorgegeben.

Aufgabe der Erfindung ist es, eine Bilderfassungsvorrichtung der genannten Art derart weiterzubilden, dass ein Abstand zwischen Objektiveinrichtung und Bildwandlervorrichtung möglichst unabhängig von der Anordnung und Wirkrichtung der Streben ist.

Diese Aufgabe wird gelöst durch eine Bilderfassungsvorrichtung mit den Merkmalen von Anspruch 1.

Die Erfindung ist durch die anliegenden Ansprüche definiert. In Bezug genommene Ausführungsformen, die nicht unter Ansprüche fallen, sind als Beispiel zum besseren Verständnis der Erfindung zu verstehen.

Bei der vorgeschlagenen Bilderfassungsvorrichtung können die optische Achse und die Strebenbezugsachse voneinander entkoppelt werden. Der Abstand zwischen optischer Achse und Strebenbezugsachse ermöglicht es ferner in vorteilhafter Weise, alle sechs Bewegungsfreiheitsgarde der parallelkinematischen Bewegungseinrichtung zu nutzen.

Durch das Trennen von optischer Achse und Strebenbezugsachse ist es ferner möglich, die Größe von Objektiv bzw. Bildwandler unabhängig von der Träger-Streben-Struktur auszugestalten bzw. zu wählen.

Weiterbildend wird vorgeschlagen, dass die Bildwandlervorrichtung mittels einer Bildwandlerhalterung an der wandlerseitigen Trägeranordnung befestigt ist, wobei die Bildwandlervorrichtung und die wandlerseitige Trägeranordnung vorzugsweise relativ zueinander verstellbar sind, insbesondere mittels Verstellung oder/und Austausch der Bildwandlerhalterung.

Auch die Objektiveinrichtung ist bevorzugt mittels einer Objektivhalterung an der objektivseitigen Trägeranordnung befestigt ist, wobei die Objektiveinrichtung und die objektivseitige Trägeranordnung vorzugsweise relativ zueinander verstellbar sind, insbesondere mittels Verstellung oder/und Austausch der Objektivhalterung.

Die wandlerseitige Trägeranordnung kann ein erstes Trägerelement umfassen und die objektivseitige Trägeranordnung kann ein zweites Trägerelement umfassen, wobei die Bildwandlervorrichtung am ersten Trägerelement und die Objektiveinrichtung am zweiten Trägerelement befestigt sind, vorzugsweise mittels der zugeordneten Wandlerhalterung bzw. Objektivhalterung. Hierzu wird ferner vorgeschlagen, dass das erste und das zweite Trägerelement mittels der Streben miteinander verbunden sind, so dass vorzugsweise eine Hexapodenstruktur gebildet wird aus dem ersten Trägerelement, dem zweiten Trägerelement und den Streben. Dabei kann insbesondere bei der Verwendung der Bilderfassungseinrichtung zur Aufnahme eines Bildes das erste oder das zweite Trägerelement bei Verwendung der Bilderfassungseinrichtung ortsfest gehalten sein. Es wird insbesondere daran gedacht, dass das ortsfest gehaltene Trägerelement mit einem Grundrahmen der Bilderfassungsvorrichtung verbunden ist bzw. an diesem befestigt ist.

Bevorzugt umfasst die bzw. eine parallelkinematische Bewegungseinrichtung sechs Streben, wobei die Streben in ihrer Länge verstellbar oder teleskopierbar ausgeführt sein können, insbesondere als Linearaktuatoren ausgebildet sein können.
Weiterbildend wird vorgeschlagen, dass die gelenkigen Strebenenden an den betreffenden Trägeranordnungen, insbesondere deren Trägerelemente, derart angeordnet sind, dass die sechs Strebengelenke einer Trägerebene der betreffenden Trägeranordnung auf zwei Geraden angeordnet sind, wobei vorzugsweise zwei Gelenke auf einer ersten Gerade und vier Gelenke auf einer zweiten Gerade liegen, wobei die erste und die zweite Gerade zueinander parallel sind. Durch eine derartige Anordnung der Gelenke an den Trägeranordnungen bzw. den Trägerelementen kann eine vereinfachte Fertigung der Träger und eine bessere Montage der Gelenke an den Trägerelementen bzw. Trägeranordnungen erreicht werden. Ferner ergibt sich durch diese Anordnung der Streben bzw. ihrer Gelenke quer und längs zur Strebenbezugsachse eine Strahlendurchtrittsöffnung für die Objektiveinrichtung und den Bildwandler, wobei diese Strahlendurchtrittsöffnung größer oder kleiner gewählt werden kann je nach Anordnung der Gelenke entlang der beiden Geraden und dem jeweiligen Abstand von Gelenkpaaren auf der betreffenden Geraden.

Um eine einfache relative Verstellung von Objektiveinrichtung und Bildwandlervorrichtung zueinander zu ermöglichen, kann die Bilderfassungseinrichtung ferner den Streben zugeordnete Antriebe umfassen, die manuell oder durch eine Steuereinheit ansteuerbar sind, um eine Längenverstellung der Streben entlang ihrer jeweiligen Strebenachse zu bewirken (Teleskopierbarkeit der Streben).

Weitere vorteilhafte Ausgestaltungen können wie folgt sein:
zwischen der Objektiveinrichtung und der Bildwandlervorrichtung kann ein lichtdichter Balg angeordnet sein; oder /und
die Bildwandlervorrichtung oder/und die Objektiveinrichtung kann bzw. können auswechselbar sein, oder/und
die Bildwandlervorrichtung kann als Sensor, insbesondere CCD-Sensor oder CMOS-Sensor ausgebildet sein.

Ferner kann auch der Abstand von Objektiveinrichtung zum Bildwandler bzw. der Bildebene durch Zwischenringe vergrößert werden. Denkbar ist die Verwendung solche Zwischenringe objektivseitig oder/und bildwandlerseitig.

Die Erfindung betrifft auch ein Bilderfassungssystem, umfassend eine Bilderfassungseinrichtung mit wenigstens einem der oben beschriebenen Merkmale, wenigstens eine Steuereinheit, wenigstens eine Anzeigeeinheit, und wenigstens eine Schnittstelleneinrichtung zur Kommunikation zwischen der Bilderfassungseinrichtung und der Steuereinheit oder/und der Anzeigeeinheit, wobei die Steuereinheit oder/und die Anzeigeeinheit Teile eines Computersystems sind, insbesondere eines tragbaren Computers wie beispielsweise Laptop, Notebook, Tablet-Computer oder Smartphone.

Hierzu wird weiterbildend vorgeschlagen, dass die Schnittstelleneinrichtung derart eingerichtet ist, dass eine drahtlose Kommunikationsverbindung zwischen der Bilderfassungseinrichtung und der Steuereinheit oder/und Anzeigeeinheit herstellbar oder hergestellt ist.

Die Ansteuerung von Antrieben für die Verstellung der Streben der Bilderfassungseinrichtung oder/und die Ansteuerung einer Bildaufnahme mittels der Bildwandlervorrichtung oder/und die Einstellung der Objektiveinrichtung kann mittels der Steuereinheit oder/und der Anzeigeeinheit erfolgen, vorzugsweise durch Eingaben eines Benutzers über eine zugehörige Benutzerschnittstelle, wie etwa Tastatur, Maus, Touchscreen, Bewegungssensoren und dergleichen.

Nachfolgend wird die Erfindung unter Bezugnahme auf die Figuren beispielhaft anhand einiger Ausführungsformen genauer beschrieben.
- Fig. 1: zeigt eine vereinfachte schematische Darstellung einer ersten Ausführungsform einer Bilderfassungsvorrichtung mit parallelkinematischer Bewegungseinrichtung.
- Fig. 2: zeigt rein schematisch unterschiedliche Beispiele der Anordnung von Objektiveinrichtung und Bildwandlervorrichtung der Bilderfassungsvorrichtung unter Verwendung einer einzelnen Bewegungseinrichtung, wobei Fig. 2a) den Stand der Technik darstellt.
- Fig. 3: zeigt rein schematisch weitere unterschiedliche Beispiele der Anordnung von Objektiveinrichtung und Bildwandlervorrichtung der Bilderfassungsvorrichtung unter Verwendung einer einzelnen Bewegungseinrichtung.
- Fig. 4: zeigt rein schematisch weitere unterschiedliche Beispiele der Anordnung von Objektiveinrichtung und Bildwandlervorrichtung der Bilderfassungsvorrichtung unter Verwendung einer einzelnen Bewegungseinrichtung.
- Fig. 5: zeigt rein schematisch unterschiedliche Beispiele der Anordnung von Objektiveinrichtung und Bildwandlervorrichtung der Bilderfassungsvorrichtung unter Verwendung von zwei Bewegungseinrichtungen.
- Fig. 6: zeigt rein schematisch weitere unterschiedliche Beispiele der Anordnung von Objektiveinrichtung und Bildwandlervorrichtung der Bilderfassungsvorrichtung unter Verwendung von zwei Bewegungseinrichtungen.
- Fig. 7: zeigt rein schematisch unterschiedliche Beispiele der Anordnung von Objektiveinrichtung und Bildwandlervorrichtung der Bilderfassungsvorrichtung unter Verwendung von zwei ineinander verschachtelten Bewegungseinrichtungen.
- Fig. 8: zeigt schematisch die Anordnung von Streben in Trägerebenen der Trägeranordnungen sowie unterschiedliche Ausgestaltungen der Trägergrundformen.
- Fig. 9: zeigt schematisch eine parallelkinematische Bewegungseinrichtung, bei der die Streben längenunveränderlich sind, aber einseitig verschieblich gelagert sind.
- Fig. 10: zeigt schematisch zwei Bilderfassungsvorrichtungen mit einer parallelkinematischen Bewegungseinrichtung entsprechend der Fig. 9.
- Fig. 11: zeigt in einem vereinfachten Blockdiagramm das Zusammenwirken der Bilderfassungsvorrichtung mit einer Steuereinheit, einer Anzeige und Eingabemitteln.

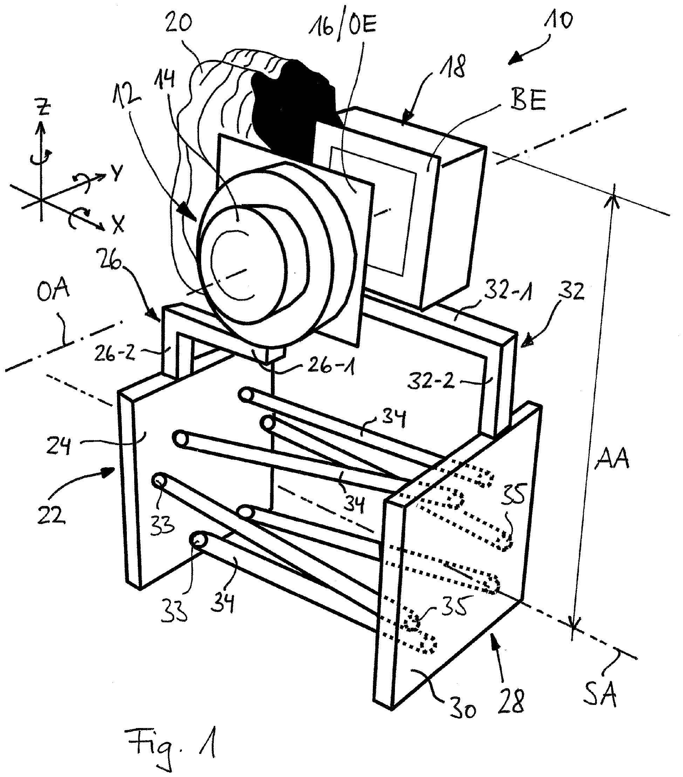

In Fig. 1 ist in einer schematischen perspektivischen Darstellung eine Bilderfassungsvorrichtung 10, insbesondere in Form einer Kamera bzw. Fachkamera, dargestellt. Die Bilderfassungsvorrichtung 10 umfasst eine Objektiveinrichtung 12, die wenigstens ein optisches Objektiv 14 umfasst. Durch die Objektiveinrichtung wird eine zur optischen Achse OA des Objektivs 14 orthogonale Objektivebene OE festgelegt. Diese Objektivebene OE ist eine gedachte Ebene, die in der Fig. 1 beispielhaft durch eine mit dem Objektiv 14 verbundene Objektivstandarte 16 repräsentiert ist. Ferner umfasst die Bilderfassungsvorrichtung 10 eine bevorzugt digitale Bildwandlervorrichtung 18, die eine Bildebene BE festlegt. In einem Grundzustand der Bilderfassungsvorrichtung sind die Objektivebene OE und die Bildebene BE parallel zueinander, so dass die optische Achse OA orthogonal durch beide Ebenen OE, BE tritt. Die Bildaufnahmevorrichtung der Fig. 1 zeigt einen solchen Grundzustand.

Die Objektiveinrichtung 12 ist an einer objektivseitigen Trägeranordnung 22 angebracht. Diese Trägeranordnung 22 umfasst in dieser Ausführungsform einen objektivseitigen Träger 24 und eine Objektivhalterung 26. Die Objektivhalterung 26 ist hier beispielhaft als Winkelstab ausgeführt mit einem Horizontalabschnitt 26-1 und einem Vertikalabschnitt 26-2. Das Objektiv 14 ist an der Objektivhalterung 26, insbesondere dem Horizontalabschnitt 26-1 befestigt.

Die Bildwandlervorrichtung 18 ist an einer wandlerseitigen Trägeranordnung 28 angebracht. Diese Trägeranordnung 28 umfasst in dieser Ausführungsform einen wandlerseitigen Träger 30 und eine Bildwandlerhalterung 32. Die Bildwandlerhalterung ist hier beispielhaft als Winkelstab ausgeführt mit einem Horizontalabschnitt 32-1 und einem Vertikalabschnitt 32-2. Der Bildwandler 18 ist an der Bildwandlerhalterung 32, insbesondere dem Horizontalabschnitt 32-1 befestigt.

Zwischen der Objektiveinrichtung 12 und der Bildwandlervorrichtung 18 erstreckt sich ein hier nur teilweise dargestellter lichtdichter Balg 20.

Die objektivseitige Trägeranordnung 22 und die bildwandlerseitige Trägeranordnung 28 sind miteinander durch mehrere Streben 34 verbunden, die bei 33 bzw. 35 jeweils gelenkig, insbesondere mittels Kugelgelenken, Kardangelenken oder dergleichen an dem jeweiligen Träger 24 bzw. 30 angeschlossen sind. Die Streben 34 sind in Ihrer Länge verstellbar, insbesondere teleskopierbar, so dass die objektivseitige Trägeranordnung 22 und die wandlerseitige Trägeranordnung 28 relativ zueinander verstellt werden können. Hieraus ergibt sich dann auch eine relative Beweglichkeit von Objektiv 14 und Bildwandler 18 zueinander. Die beiden Trägeranordnungen 22, 28 sind translatorisch entlang einer Strebenbezugsachse SA beweglich, d.h. die beiden Träger 24, 30 können entlang dieser Strebenbezugsachse SA zueinander hin oder voneinander weg bewegt werden durch Ausziehen oder zusammenstoßen der teleskopierbaren Streben 34. Bevorzugt kommen sechs Streben 34 zum Einsatz, die zusammen mit den Trägeranordnungen 22, 28 bzw. den Trägern 24, 30 eine parallelkinematische Hexapod-Struktur bilden. Eine solche Hexapod-Struktur erlaubt die relative Verstellung der Träger 24, 30 zueinander in 3 translatorischen und 3 rotatorischen Richtungen. Die Translationen können entlang der Hauptachsen X, Y, Z erfolgen; Rotationen erfolgen um diese Hauptachsen herum. Im Grundzustand der Bilderfassungsvorrichtung 10, wie er in Fig. 1 dargestellt ist, ist die optische Achse OA parallel zur Y-Hauptachse und die Strebenbezugsachse SA ist parallel zur X-Hauptachse. Die Z-Hauptachse ist othogonal zu den beiden anderen Hauptachsen X und Y.

Wie aus der Darstellung der Fig. 1 ersichtlich, sind die optische Achse OA und die Strebenbezugsachse SA orthogonal zueinander ausgerichtet. Ferner sind sie in Z-Richtung voneinander in einem Abstand AA angeordnet. Die optische Achse OA und die Strebenbezugsachse SA fallen also nicht zusammen, wie dies aus dem einleitend beschriebenen Stand der Technik bekannt ist.

Nachfolgend werden verschiedene schematische Beispiele von Bilderfassungsvorrichtungen 10 erläutert, wobei für sich entsprechende Teile die gleichen Bezugszeichen wie in der Fig. 1 verwendet werden.

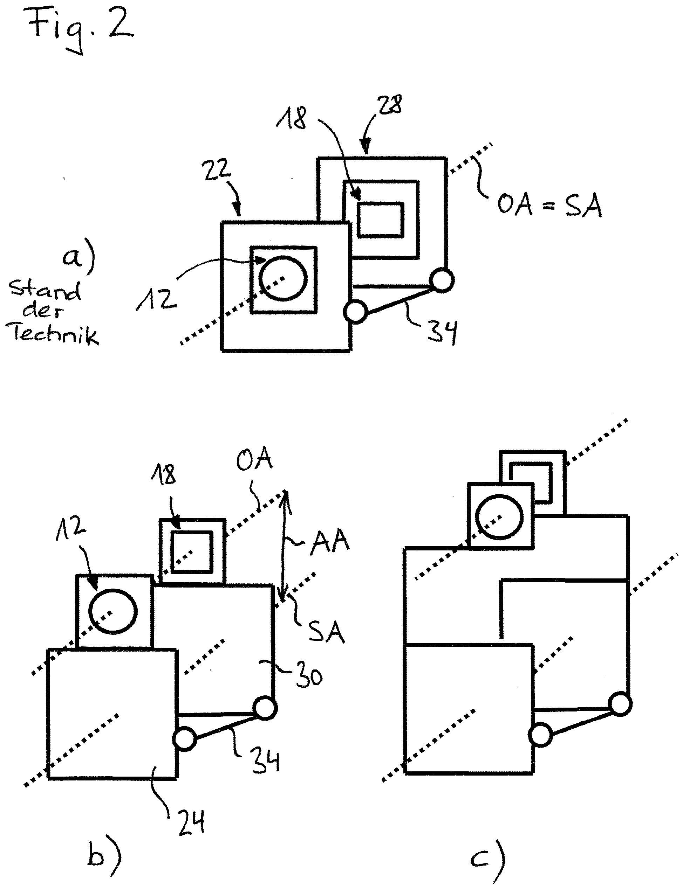

In Fig. 2a) sind eine objektivseitige Trägeranordnung 22 und eine wandlerseitige Trägeranordnung 28 entsprechend dem Stand der Technik nochmals dargestellt. Stellvertretend für die parallelkinematische Bewegungseinrichtung, die durch die mehreren Streben gebildet wird, ist eine Strebe 34 rein schematisch zwischen den beiden Trägeranordnungen 22, 28 dargestellt. Bei einer derartigen Anordnung sind die optische Achse OA und die Strebenbezugsachse zumindest in einer Grundstellung der Bilderfassungsvorrichtung im Wesentlichen deckungsgleich. Die mehreren Streben 34 sind mit ihren Gelenken üblicherweise entlang eines Kreisbogens an den jeweiligen Trägeranordnungen 22, 28 befestigt, wobei die Objektiveinrichtung 12 und die Bildwandlervorrichtung 18 innerhalb dieser Kreise angeordnet sind.

In den Figuren 2b) und c) sind die Objektiveinrichtung 12 und die Bildwandlervorrichtung 18 derart an den jeweiligen Trägeranordnungen 22 bzw. 28 angebracht, dass in der dargestellten Grundstellung die optische Achse OA und die Strebenbezugsachse SA parallel zueinander in einem Achsabstand AA angeordnet sind. In Fig. 2b) sind die Objektiveinrichtung 12 und die Bildwandlervorrichtung 18 mittels einer nicht genauer dargestellten Halterung am Rand der jeweiligen Träger 24, 30 angebracht. In Fig. 2c) sind die Objektiveinrichtung 12 und die Bildwandlervorrichtung 18 mittels abgewinkelter Halterungen 26 bzw. 32, wie sie bereits aus der Fig. 1 bekannt sind, an den Trägern 24 bzw. 32 angebracht. Die Halterungen 26 bzw. 32 können unveränderlich sein oder aber auch relativ zu den jeweiligen Trägern 24, 30 beweglich bzw. einstellbar sein. Beispielsweise können die Horizontalträger 26-1 bzw. 32-1 entlang des jeweiligen Vertikalträgers 26-2 bzw. 32-2 in Z-Richtung verschiebbar und arretierbar sein. Denkbar ist ferner auch, dass die Objektiveinrichtung 12 bzw. die Bildwandlervorrichtung 18 entlang des jeweiligen Horizontalträgers 26-1 bzw. 32-1 beweglich sind und in gewünschten Positionen arretierbar sind. Durch die Halterungen 26 bzw. 32 wird der Abstand AA zwischen optischer Achse OA und Strebenbezugsachse SA vergrößert. Entsprechend hat eine kleine relative Bewegung der beiden Träger 24 bzw. 30 zueinander in der Ausführungsform gemäß Fig. 2c) einen größeren Einfluss auf die relative Bewegung von Objektiveinrichtung 12 und Bildwandlervorrichtung 18 zueinander als in der Ausführungsform der Fig. 2b).

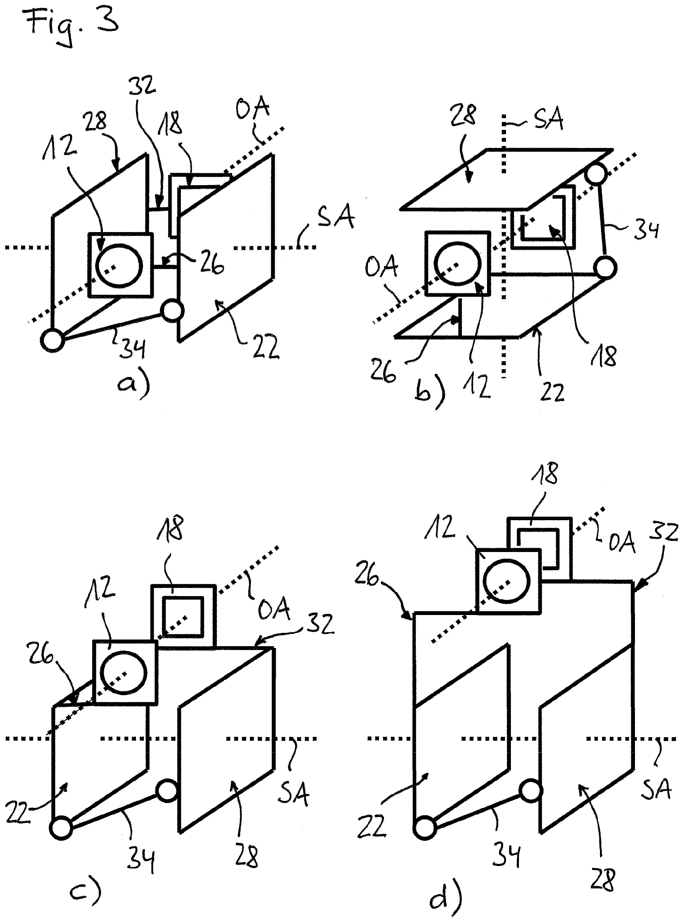

In den Fig. 3a) und 3b) sind Beispiele dargestellt, bei denen die Objektiveinrichtung 12 und die Bildwandlervorrichtung 18 innerhalb der Strebenstruktur, von der eine Strebe 34 stellvertretend dargestellt ist, angeordnet sind. Die optische Achse OA ist jeweils orthogonal zur Strebenbezugsachse SA ausgerichtet in einer Grundstellung von Objektiveinrichtung 12 und Bildwandlervorrichtung 18 zueinander.

Die Fig. 3c) und d) zeigen Trägeranordnungen 22, 28 ähnlich wie in Fig. 3a). Allerding sind die Objektiveinrichtung 12 und die Bildwandlervorrichtung 18 an Halterungen 26, 32 angebracht. Die schematische Darstellung der Fig. 3d) repräsentiert im Übrigen die konkretere, aber ebenfalls schematische Kameradarstellung gemäß Fig. 1. Auch in den Fig. 3c) und d) ist jeweils eine Strebe 34 stellvertretend für mehrere Streben dargestellt. Die optische Achse OA und Strebenbezugsachse SA sind orthogonal zueinander ausgerichtet in der Grundstellung und weisen einen Abstand AA voneinander auf.

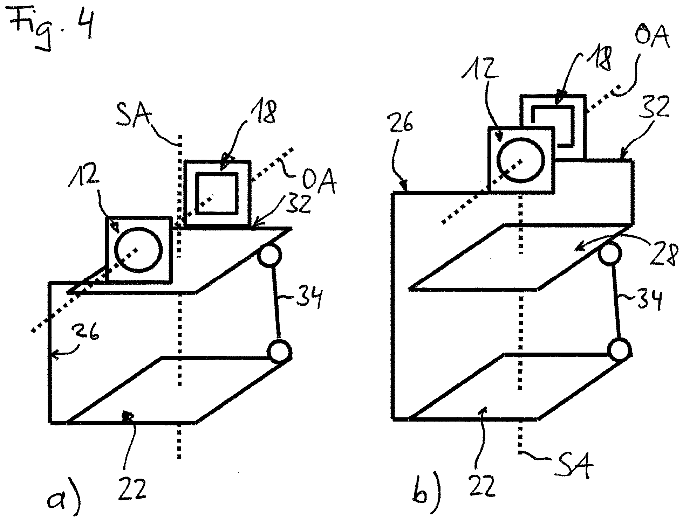

Fig. 4a) und b) zeigen Trägeranordnungen 22, 28 entsprechend der Struktur der Fig. 3b). Die Objektiveinrichtung 12 und die Bildwandlervorrichtung 18 sind wiederum über Halterungen 26, 32 mit den jeweiligen Trägern 24, 30 verbunden. Auch in den Fig. 4a) und b) ist jeweils eine Strebe 34 stellvertretend für mehrere Streben dargestellt. Die optische Achse OA und die Strebenbezugsachse SA sind orthogonal zueinander ausgerichtet in der Grundstellung und schneiden sich in einer Ebene orthogonal zur Bildebene bzw. zur Optikebene.

Bei den bisher vorgestellten Beispielen der Positionierung von Trägeranordnungen 22, 28, Optikeinrichtung 12 und Bildwandlervorrichtung 18 ist die Strebenstruktur jeweils zwischen den beiden Trägern 24, 30 ausgebildet, so dass diese Träger 24, 30 direkt miteinander verbunden sind. Bei Verwendung eines solchen Aufbaus, wird in der Regeln einer der Trägeranordnungen, etwa die Trägeranordnung 28 (Träger 30) ortsfest an einem nicht näher dargestellten Grundrahmen, Gestell, Stativ oder dergleichen der Bilderfassungseinrichtung angebracht. Die andere Trägeranordnung 22 (Träger 24) ist über die Streben 34 verbunden und kann relativ zur festen Trägeranordnung 28 bewegt werden, um eine gewünschte Relativpositionierung von Objektiveinrichtung 12 und Bildwandlervorrichtung 18 zueinander einstellen zu können. Bei einem solchen Aufbau der Bilderfassungsvorrichtung ist also entweder die Objektiveinrichtung 12 oder die Bildwandlervorrichtung 18 beweglich.

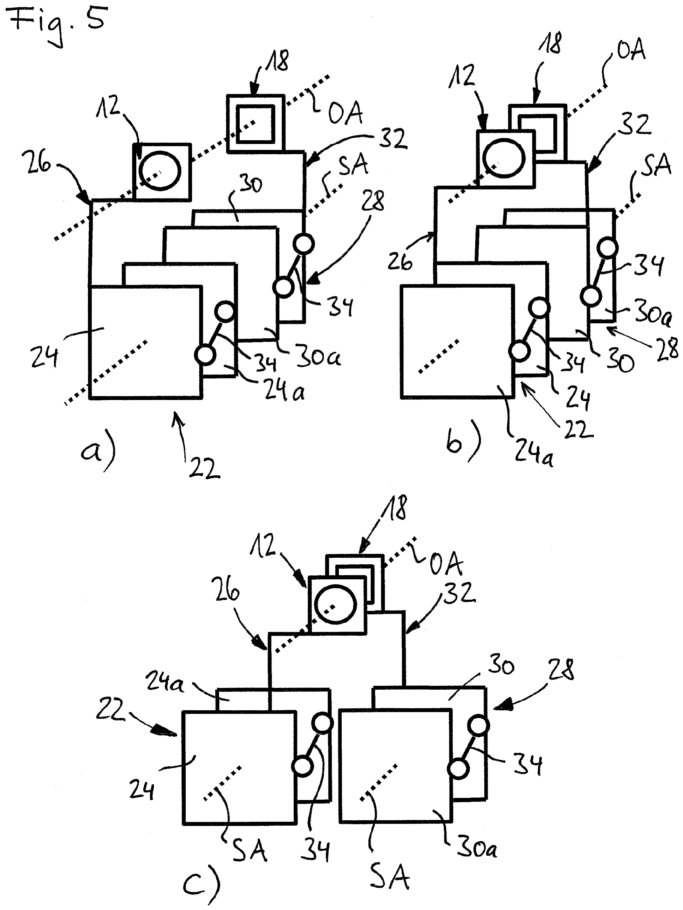

Bei einer weiteren Ausführungsform der Bilderfassungsvorrichtung 10 , wie sie in verschiedenen Beispielen in den Fig. 5a) bis c) dargestellt ist, können die Trägeranordnungen 22, 28 einen weiteren Träger 24a bzw. 30a umfassen. Dieser Träger 24a, 30a ist jeweils fest mit einem nicht näher dargestellten Grundrahmen, Gestell, Stativ oder dergleichen verbunden und der jeweils zugehörige Träger 24 bzw. 30 ist über Streben 34 mit dem weiteren Träger 24a. 30a verbunden. Entsprechend sind die Träger 24, 30 relativ beweglich zu den feststehenden Trägern 24a, 30a. Die Objektiveinrichtung 12 bzw. die Bildwandlervorrichtung 18 sind an den Trägern 24 bzw. 30 mittels der bereits bekannten Halterungen 26 bzw. 32 angebracht, so dass das Objektiv 14 und der Bildwandler 18 beide bewegt werden können, um eine gewünschte relative Positionierung zueinander einzustellen. Durch eine solche zweifache Hexapod-Struktur kann die relative Beweglichkeit von Objektiveinrichtung 12 und Bildwandlervorrichtung 18 zueinander noch erweitert werden, insbesondere können beide individuell bewegt werden, weil sie nicht über Ihre Trägeranordnungen 22, 28 mittels der einstellbaren Streben 34 direkt verbunden sind.

Durch die Verdoppelung der Streben-Struktur ergibt sich auch eine Verdoppelung der Strebenbezugsachsen. In den Fig. 5a) und b) sind die Trägeranordnungen 22, 28 so angeordnet, dass die beiden Strebenbezugsachse SA auf einer gemeinsamen Achse liegen in der Grundstellung der Bilderfassungsvorrichtung. Die optische Achse OA ist jeweils parallel hierzu und im Abstand angeordnet. In Fig. 5c) sind die Trägeranordnungen 22, 28 so angeordnet, dass in der Grundstellung zwei parallel ausgerichtete Strebenbezugsachsen SA vorliegen. Die optische Achse OA ist zu beiden Strebenbezugsachsen SA parallel und im Abstand angeordnet.

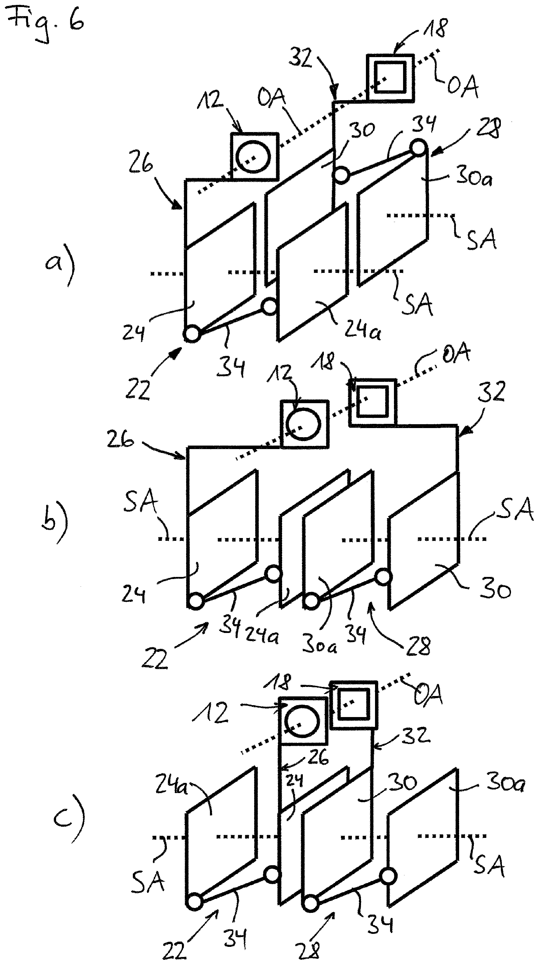

In Fig. 6 sind in den Teilfiguren a) bis c) weitere Beispiele der Bilderfassungsvorrichtung mit einer zweifachen Streben-Struktur dargestellt. In diesen Beispielen, sind die optische Achse OA und die Strebenbezugsachse SA (zwei parallele in Fig. 6a), je eine in Fig. 6b) und c))in der Grundstellung orthogonal zueinander und im Abstand ausgerichtet. Hinsichtlich des strukturellen Aufbaus werden die gleichen Elemente verwendet, wie sie in der Fig. 5 gezeigt sind. Entsprechend sind in der Fig. 6 einfach die entsprechenden Bezugszeichen gezeigt ohne hier erneut Elemente bzw. Bauteile der Bilderfassungsvorrichtung zu beschreiben.

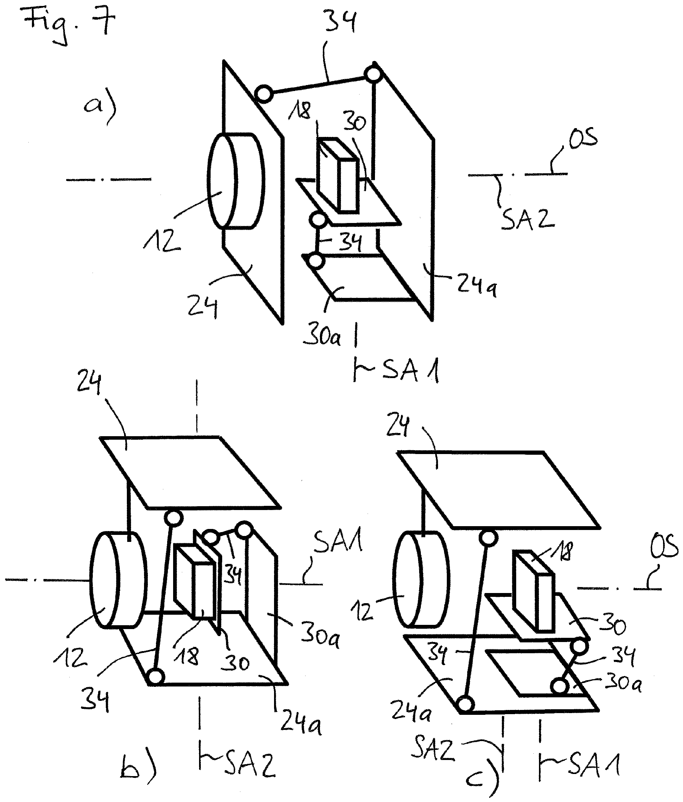

Die zweifache Strebenstruktur kann auch in einer verschachtelten Art und Weise eingesetzt werden, wie dies beispielhaft in Fig. 7a) bis c) dargestellt ist. In diesen Ausführungsformen sind jeweils die Träger 24a und 30a miteinander verbunden, wobei die Träger 24 und 30 über die jeweilige Strebenstruktur 24 mit den Trägern 24a und 30a gekoppelt sind, so dass die Objektiveinrichtung 12 und die Bildwandlervorrichtung 18 relativ zueinander bewegt und positioniert werden können. In allen Fällen ist die optische Achse OA zu mindestens einer der Strebenbezugsachsen SA1 bzw. SA2 orthogonal angeordnet, wobei sich die Strebenbezugsachse SA1 jeweils auf die Streben zwischen den Trägern 30 und 30a bezieht und wobei sich die Strebenbezugsachse SA2 jeweils auf die Streben der Träger 24, 24a bezieht.

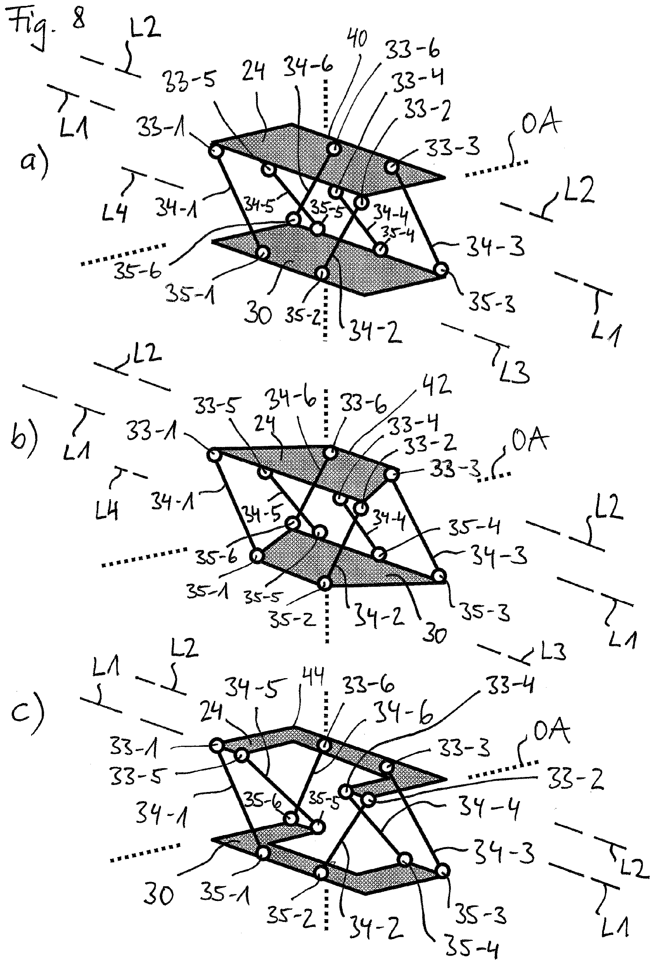

Die Anordnung der Streben 34, insbesondere von sechs Streben zwischen Trägern 24, 30 (Fig. 1 bis 4) bzw. zwischen Trägern 24 und 24a bzw. 30 und 30a (Fig. 5 bis 7) erfolgt bevorzugt in einer anderen Weise als der bekannten Anordnung der Anlenkpunkte (Gelenke) entlang eines gemeinsamen Kreisbogens bzw. geschlossenen Kreises. In Fig. 8a) sind beispielshaft und schematisch die Träger 24, 30 der Trägeranordnungen 22, 28 dargestellt mit den Streben 34-1 bis 34-6. Die Streben 34-1 bis 34-6 sind mit jeweiligen Gelenken 33-1 bis 33-6 und 35-1 bis 35-6 mit den jeweiligen Trägern 24, 30 verbunden.

Die Anordnung der Gelenke 33-1 bis 33-6 und 35-1 bis 35-6 an den jeweiligen Trägern 24, 30 ist bevorzugt entlang des Umfangs eines Rechtecks 40, insbesondere entlang von dessen zwei Längsseiten (repräsentiert durch Verlängerungslinien L1 und L2 für den Träger 24 und die Verlängerungslinien L3 und L4 für den Träger 30) angeordnet. Dabei befinden sich beispielsweise für den rechteckigen Träger 24 auf der einen Linie L1 bzw. Längsseite vier Gelenke 33-1. 33-5, 33-4 und33-2 und auf der anderen Linie L2 bzw. Längsseite zwei Gelenke 33-3 und 33-6. Beim rechteckigen Träger 30 befinden sich auf der einen Längsseite L3 zwei Gelenke 35-1 und 35-2, während sich auf der anderen Längsseite L4 vier Gelenke 35-3, 35-4, 35-5 und 35-6 befinden. Somit erstrecken sich die Streben wie folgt: die Strebe 34-1 von der Längsseite L1 geneigt zur Längsseite L3, die Strebe 34-2 von der Längsseite L1 geneigt zur Längsseite L3, die Strebe 34-3 von der Längsseite L2 geneigt zur Längsseite L4, die Strebe 34-4 von der Längsseite L1 geneigt zur Längsseite L4, die Strebe 34-5 von der Längsseite L1 geneigt zur Längsseite L4, die Strebe 34-6 von der Längsseite L2 geneigt zur Längsseite L4. Die Längsseiten L1, L3 und die beiden Streben 34-1 und 34-2 bilden dabei ein Trapez. Ebenso bilden die Längsseiten L2 und L4 mit den Streben 34-3 und 34-6 ein Trapez. Die Streben 34-4 und 34-5 erstrecken sich quer zu diesen Trapezen, in einer Art diagonal zwischen den beiden Trägern 24 und 30. Die Streben 34-1 und 34-2 bilden ein erstes Strebenpaar, die Streben 34-3 und 34-6 bilden ein zweites Strebenpaar und die die Streben 34-4 und 34-5 bilden ein drittes Strebenpaar. Anders ausgedrückt sind an den Längsseiten L1 und L3 das erste Strebenpaar angeordnet, an den Längsseiten L2 und L4 das zweite Strebenpaar und an den Längsseiten L1 und L4 das dritte Strebenpaar. Die Streben 34-4 und 34-5 sind im Übrigen parallel zueinander ausgerichtet. Durch das Anordnen der Gelenke an den Längsseiten der Rechtecke ergibt sich in einer Seitenansicht eine N-förmige Anordnung der Streben, wobei zwei "N" gebildet sind einerseits durch die Streben 34-1, 34-5 und 34-6 und andererseits durch die Streben 34-2, 34-3 und 34-4.

Durch die beschriebene Anordnung der Streben 34-1 bis 34-6 kann der Raum innerhalb der trapezförmig angeordneten Strebenpaare (erstes und zweites Strebenpaar) in vorteilhafter Weise in Querrichtung (orthogonal zu den Längsseiten) als optische Achse OA genutzt werden. Ferner können bei einer derartigen Anordnung der Streben auch unterschiedliche Formen der Träger 24, 30 zum Einsatz kommen, wie etwa ein Rechteck (Fig. 8a), ein Trapez (Fig. 8b) oder eine Art U-Form (Fig. 8c). Insbesondere die U-Form bietet den Vorteil, dass durch den Wegfall von Trägermaterial im zentralen Bereich der Träger 24, 30 (verglichen mit der Rechteck- bzw. Trapezform) zum einen Gewicht eingespart werden kann und zum andere eine weitere Durchtrittsöffnung geschaffen wird, die ggf. für die Anordnung der optischen Achse genutzt werden kann.

Bei den Ausführungsbesipielen der Fig. 1 bis 8 kommen vorzugsweise Streben 34 zum Einsatz, die als längenveränderliche Linearaktuatoren ausgebildet sind. Solche Linearaktuatoren können mittels entsprechender, insbesondere elektrischer Antriebe in Ihrer Länge verändert werden. Dabei können die einzelnen Antriebe der Streben auch einzeln angesteuert werden, um durch individuelle Bewegungen der einzelnen Streben eine gewünschte Relativbewegung bzw. Relativpositionierung von Objektiveinrichtung 12 und Bildwandlervorrichtung 18 zu erreichen.

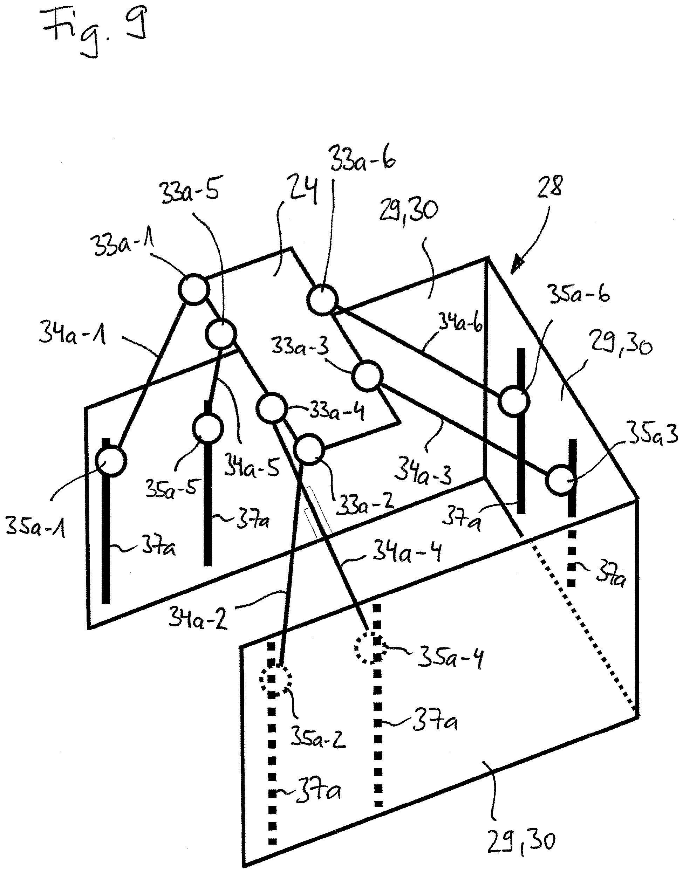

Alternativ zu längenveränderlichen Streben 34 können auch längenunveränderliche, starre Streben 34a-1 bis 34a-6 eingesetzt werden, wie dies beispielhaft und schematisch in Fig. 9 dargestellt ist. Um die gewünschte Beweglichkeit zu erreichen, sind die Streben 34a an der Trägeranordnung 28 bzw. an Grundrahmenelementen 29 mittels ihrer jeweiligen Gelenke 35a-1 bis 35a-6 verschieblich gelagert, so dass die Gelenke entlang der Trägerebene bzw. Rahmenebene linear verstellt werden können. Wie aus der Fig. 9 ferner ersichtlich ist, sind die Streben 34a mit ihren jeweiligen Gelenken 33a-1 bis 33a-6 am Träger 24 in der gleichen Weise angeordnet, wie dies für die Fig. 8a) beschrieben worden ist.

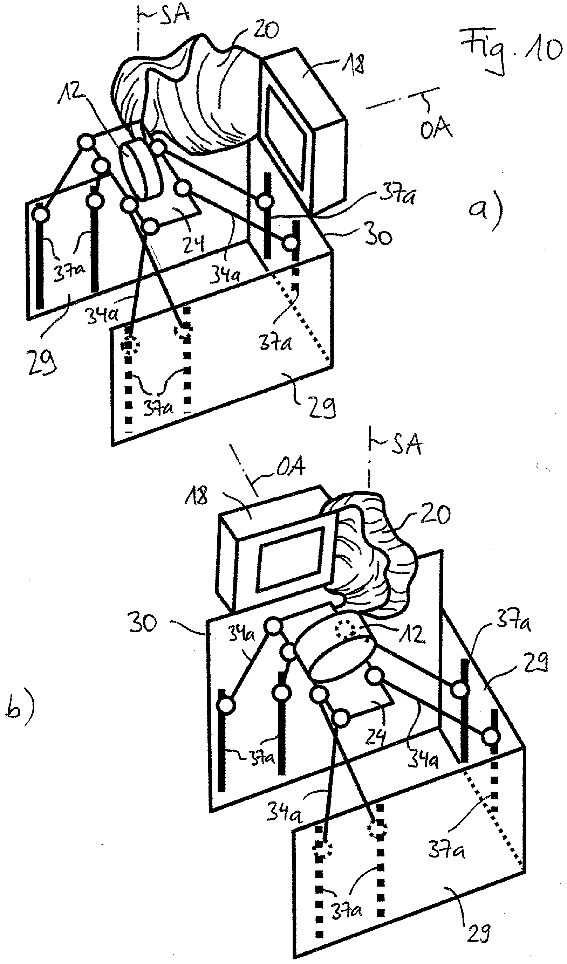

Die Fig. 10a) und b) zeigen zwei Beispiele der Anordnung von Objektiveinrichtung 12 und Bildwandlervorrichtung 18 an einer parallelkinematischen Struktur gemäß Fig. 9. In Fig. 10 kommt dabei als Träger 30 die Basis der im Wesentlichen U-förmigen Konstruktion zum Einsatz. Die beiden Schenkel der U-förmigen Struktur sind Grundrahmenelemente 29. Die Objektiveinrichtung 12 ist am Träger 24 angeordnet und kann relativ zur feststehenden Bildwandlervorrichtung 18 bewegt und positioniert werden. In Fig. 10b) ist die Bildwandlervorrichtung 18 an einem Schenkel der U-förmigen Struktur angebracht. Dieser Schenkel bildet dann den Träger 30 und die Basis und der andere Schenkel der U-förmigen Struktur sind Grundrahmenelemente 29. In beiden Beispielen der Fig. 10 verläuft die optische Achse OA orthogonal zur Strebenbezugsachse SA. Selbstverständlich ist es auch denkbar, dass Objektiveinrichtung 12 und Bildwandlervorrichtung 18 vertauscht werden, so dass die Bildwandlervorrichtung 18 relativ zur feststehenden Objektiveinrichtung 12 bewegt und positioniert werden kann. Ferner ist es auch denkbar die Objektiveinrichtung 12 und die Bildwandlervorrichtung 18 derart anzuordnen, dass die optische Achse OA und die Strebenbezugsachse SA parallel und im Abstand zueinander angeordnet sind, etwa indem die Objektiveinrichtung 12 mit Ihrer Objektivebene parallel zum Träger 24 angebracht wird, beispielsweise an einem der Längsränder des Trägers 24 zwischen den beiden Gelenken 33a-5 und 33a-4 (Fig. 9). Bei einer solchen Ausführungsform wäre die Bildwandlervorrichtung 18 zwischen den beiden Schenkeln der U-förmigen Struktur aufgenommen, so dass die Bildebene parallel zur Objektivebene in der Grundstellung ist.

Die Verstellung der Gelenke 35a entlang entsprechender Linearführungen 37a oder Gewinde oder dergleichen kann ebenfalls motorisch angetrieben sein, so dass eine automatisierte Ansteuerung der Bewegung des Trägers 24 ermöglicht ist durch Übertragung der Linearbewegungen der Gelenke 35a auf die starren Streben 34a.

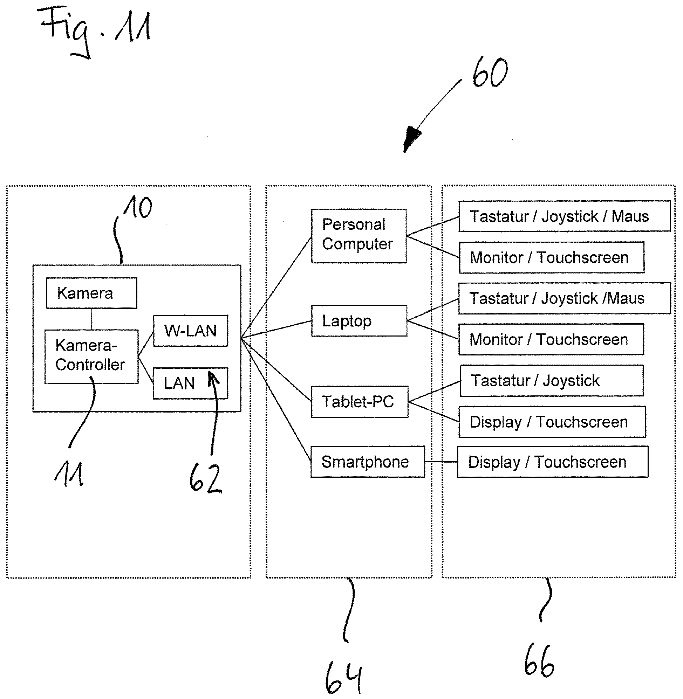

Fig. 11 zeigt in schematischer Diagrammdarstellung Bilderfassungssystem 60 mit einer oben beschriebenen Bilderfassungsvorrichtung 10, insbesondere ausgeführt als Kamera, einen Kamera-Controller 11 umfasst, der über eine Netzwerkeinrichtung 62 (LAN, WLAN, Bluetooth, oder dergleichen) kabelgebunden oder drahtlos mit einer Steuereinheit 64 kommunizieren kann. Die Steuereinheit 64 kann ein beliebiger Computer sein, etwa Personal Computer, Laptop, Tablet-Computer, Smartphone oder dergleichen. Auf diesem Computer ist eine zur Steuerung der Bilderfassungsvorrichtung 10 programmierte Software geladen, mittels welcher Bewegungen der Streben 34 bzw. 34a der Bilderfassungsvorrichtung angesteuert werden können, um die Objektiveinrichtung 12 und die Bildwandlervorrichtung 18 relativ zueinander zu bewegen und zu positionieren. Ferner ist diese Software auch dazu eingerichtet, nach Einstellung der Relativposition von Objekteinrichtung 12 und Bildwandlervorrichtung 18 zueinander ein in der Bildwandlervorrichtung erzeugtes Bild aufzunehmen, insbesondere temporär oder dauerhaft in einem internen oder externen Speicher des Computers zu speichern. Ein aufzunehmendes Bild kann dabei an einer Anzeigeeinheit 66 wie etwa Monitor, Displays oder Touchscreens angezeigt werden, so dass ein Benutzer des Bilderfassungssystems bzw. der Kamera an der Anzeigeeinheit verfolgen kann, wie sich Einstellungen an der Relativstellung von Objektiveinrichtung 12 und Bildwandlervorrichtung 18 zueinander auf das aufzunehmende Bild auswirken. Die Einstellung der Objektiveinrichtung 12, etwa von optischen Eigenschaften wie Blende, Fokus etc. kann durch die Steuereinheit erfolgen, beispielsweise durch Eingaben mittels einer Tastatur, Computermaus, Joystick, Touchscreen. Ferner können diese Eingabemittel auch dazu benutzt werden, um die Bewegung der parallelkinematischen Bewegungseinrichtung (Hexapod) der Kamera anzusteuern. Es kann auch daran gedacht werden, in Smartphone oder Tablet-Computer eingebaute Bewegungssensoren dazu zu verwenden, Bewegungen der Steuereinheit in Bewegungen der Hexapod-Struktur der Kamera umzusetzen.

## Patentansprüche

1. Bilderfassungseinrichtung, insbesondere fotografische Kamera, umfassend:
wenigstens eine Bildwandlervorrichtung (18), die eine Bildebene (BE) festlegt, und wenigstens eine Objektiveinrichtung (12), die eine Objektivebene (OE) festlegt, wobei die Bildwandlervorrichtung (18) und die Objektiveinrichtung (12) relativ zueinander beweglich angeordnet sind;
wenigstens eine der Bildwandlervorrichtung (18) zugeordnete wandlerseitige Trägeranordnung (28) mit einem ersten Trägerelement (30), das eine Trägerebene definiert;
wenigstens eine der Objektiveinrichtung (12) zugeordnete objektivseitige Trägeranordnung (22) mit einem zweiten Trägerelement (24), das eine Trägerebene definiert;
wenigstens eine parallelkinematische Bewegungseinrichtung mit mehreren Streben (34), die mit ihren jeweiligen Strebenenden (35, 36) gelenkig an der Trägerebene der wandlerseitigen Trägeranordnung (28) und an der Trägerebene der objektivseitigen Trägeranordnung (22) angeordnet sind, wobei die Bildwandlervorrichtung (18) am ersten Trägerelement (30) und die Objektiveinrichtung (12) am zweiten Trägerelement (24) befestigt ist,
wobei in einer Grundstellung der Bilderfassungseinrichtung (10) die Bildebene (BE) und die Objektivebene (OE) parallel zueinander positioniert sind, so dass eine optische Achse (OA) orthogonal zur Bildebene (BE) und zur Objektivebene (OE) verläuft,
wobei die optische Achse (OA) parallel zu einer ersten Hauptrichtung (X) oder einer zweiten Hauptrichtungen (Y) ist,
wobei mittels der Bewegungseinrichtung Bewegungen in drei translatorischen und drei rotatorischen Richtungen ausführbar sind, wobei sich in der Grundstellung eine Strebenbezugsachse (SA) aus den Bezugsmittelpunkten des ersten Trägerelements (30) und des zweiten Trägerelements (24) ergibt, die parallel zu der ersten Hauptrichtung (X) oder der zweiten Hauptrichtung (Y) oder einer dritten Hauptrichtung (Z) ist,
**dadurch gekennzeichnet, dass** die Bildwandlervorrichtung (18) und die Objektiveinrichtung (12) derart an der wandlerseitigen Trägeranordnung (28) und der objektivseitigen Trägeranordnung (22) angeordnet sind, dass in der Grundstellung die optische Achse (OA) parallel zu der Strebenbezugsachse (SA) ist und einen Achsabstand (AA) von der Strebenbezugsachse (SA) aufweist, wobei der Abstand (AA) parallel zur Hauptrichtung (Z) ist, die orthogonal zur optischen Achse (OA) und zur Strebenbezugsachse (SA) ist, oder/und die optische Achse (OA) orthogonal zur betreffenden Strebenbezugsachse (SA) ausgerichtet ist.

2. Bilderfassungseinrichtung nach Anspruch 1, wobei die Bildwandlervorrichtung (18) mittels einer Bildwandlerhalterung (32) an der wandlerseitigen Trägeranordnung (28) befestigt ist, wobei die Bildwandlervorrichtung (18) und die wandlerseitige Trägeranordnung (28) relativ zueinander verstellbar sind, insbesondere mittels Verstellung oder/und Austausch der Bildwandlerhalterung (32).

3. Bilderfassungseinrichtung nach Anspruch 1 oder 2, wobei die Objektiveinrichtung (12) mittels einer Objektivhalterung (26) an der objektivseitigen Trägeranordnung (22) befestigt ist, wobei die Objektiveinrichtung (12) und die objektivseitige Trägeranordnung (22) relativ zueinander verstellbar sind, insbesondere mittels Verstellung oder/und Austausch der Objektivhalterung (26).

4. Bilderfassungseinrichtung nach einem der Ansprüche 1 bis 3, wobei die Bildwandlervorrichtung (18) mittels der zugeordneten Wandlerhalterung (32) am ersten Trägerelement (30) und die Objektiveinrichtung (12) mittels der zugeordneten Objektivhalterung (26) am zweiten Trägerelement (24) befestigt sind.

5. Bilderfassungseinrichtung nach Anspruch 4, wobei das erste und das zweite Trägerelement (24, 30) mittels der Streben (34) miteinander verbunden sind, so dass eine Hexapodenstruktur gebildet wird aus dem ersten Trägerelement (30), dem zweiten Trägerelement (24) und den Streben (34).

6. Bilderfassungseinrichtung nach Anspruch 5, wobei das erste oder das zweite Trägerelement (24, 30) bei Verwendung der Bilderfassungseinrichtung ortsfest gehalten ist.

7. Bilderfassungseinrichtung nach einem der vorhergehenden Ansprüche, wobei die wenigstens eine parallelkinematische Bewegungseinrichtung sechs Streben (34) umfasst, wobei die Streben (34) in ihrer Länge verstellbar oder teleskopierbar sind, insbesondere als Linearaktuatoren ausgebildet sind.

8. Bilderfassungseinrichtung nach Anspruch 7, wobei die Strebengelenke (33-1 bis 33-6, 35-1 bis 35-6) an den betreffenden Trägerelementen (24, 30) derart angeordnet sind, dass die sechs Strebengelenke (33-1 bis 33-6, 35-1 bis 35-6) an einem jeweiligen Trägerelement auf zwei Geraden angeordnet sind, wobei vorzugsweise zwei Gelenke auf einer ersten Gerade (L2, L3) und vier Gelenke auf einer zweiten Gerade (L1, L4) liegen, wobei die erste und die zweite Gerade zueinander parallel sind.

9. Bilderfassungseinrichtung nach einem der vorhergehenden Ansprüche, wobei sie ferner den Streben (34) zugeordnete Antriebe umfasst, die manuell oder durch eine Steuereinheit (64) betätigbar oder ansteuerbar sind, um eine Längenverstellung der Streben (34) entlang ihrer jeweiligen Strebenachse zu bewirken.

10. Bilderfassungseinrichtung nach einem der vorhergehenden Ansprüche, wobei:
zwischen der Objektiveinrichtung (12) und der Bildwandlervorrichtung (18) ein lichtdichter Balg (20) angeordnet ist, oder /und
die Bildwandlervorrichtung (18) oder/und die Objektiveinrichtung (12) auswechselbar ist bzw. sind, oder/und
die Bildwandlervorrichtung (18) als Sensor, insbesondere CCD-Sensor oder CMOS-Sensor ausgebildet ist.

11. Bilderfassungssystem, umfassend eine Bilderfassungseinrichtung (10) nach einem der vorhergehenden Ansprüche, wenigstens eine Steuereinheit (64), wenigstens eine Anzeigeeinheit (66), und wenigstens eine Schnittstelleneinrichtung (62) zur Kommunikation zwischen der Bilderfassungseinrichtung (10) und der Steuereinheit (64) oder/und der Anzeigeeinheit (66), wobei die Steuereinheit (64) oder/und die Anzeigeeinheit (66) Teile eines Computersystems sind, insbesondere eines tragbaren Computers wie beispielsweise Laptop, Notebook, Tablet-Computer oder Smartphone, wobei insbesondere die Schnittstelleneinrichtung (62) derart eingerichtet ist, dass eine drahtlose Kommunikationsverbindung zwischen der Bilderfassungseinrichtung (10) und der Steuereinheit (64) oder/und Anzeigeeinheit (66) herstellbar oder hergestellt ist.

12. Bilderfassungssystem nach Anspruch 11, wobei die Ansteuerung von Linearaktuatoren (34) der Bilderfassungseinrichtung oder/und die Ansteuerung einer Bildaufnahme mittels der Bildwandlervorrichtung (18) oder/und die Einstellung der Objektiveinrichtung (12) mittels der Steuereinheit (64) oder/und der Anzeigeeinheit (66) erfolgt, vorzugsweise durch Eingaben eines Benutzers über eine zugehörige Benutzerschnittstelle, wie etwa Tastatur, Maus, Touchscreen, Bewegungssensoren und dergleichen.

## Claims

1. Image capture device, especially photographic camera, comprising:
at least one image converter device (18) that defines an image plane (BE), and at least one lens device (12) that defines a lens plane (OE), in which the image converter device (18) and the lens device (12) are relatively movable to each other arranged;
at least one converter side carrier arrangement (28) associated to the image converter device (18) and with a first carrier element (30) defining a carrier plane;
at least one lens carrier device (22) associated to the lens device (12) and with a second carrier element (24) defining a carrier plane;
at least one parallel kinematic motion device with multiple struts (34), which is arranged with its respective strut ends (35, 36) articulated at the carrier plane of the converter-side carrier arrangement (28) and at the carrier plane of the objective-side carrier arrangement (22), wherein the image converter device (18) is attached to the first carrier element (30) and the lens device (12) is attached to the second carrier element (24),
wherein in an initial position of the image capture device (10), the image plane (BE) and the lens plane (OE) are positioned parallel to each other, so that an optical axis (OA) runs orthogonal to the image plane (BE) and the lens plane (OE), wherein the optical axis (OA) is in parallel to a first main direction (X) or a second main direction (Y),
wherein movements within in three translational and three rotational directions are executable by means of the movement device, wherein in the initial position a strut reference axis (SA) results from the reference midpoints of the first carrier element (30) and the second carrier element (24), which is parallel to the first main direction (X) or the second main direction (Y) or a third main direction (Z),
**characterized in that** the image converter device (18) and the lens device (12) are arranged in such a way on the converter-side carrier arrangement (28) and the objective-side carrier arrangement (22), that in the initial position the optical axis (OA) is shown in parallel to the strut reference axis (SA) and has an axle distance (AA) from the strut reference axis (SA), in which the distance (AA) is parallel to the main direction (Z), which is orthogonal to the optical axis (OA) and to the strut reference axis (SA), or/and the optical axis (OA) is orthogonal aligned to the respective strut reference axis (SA).

2. Image capture device according to Claim 1, in which the image converter device (18) is attached to the converter-side carrier arrangement (28) by means of an image converter mount (32), wherein the image converter device (18) and the converter-side carrier arrangement (28) are relatively adjustable to each other, in particular by means of adjustment or/and replacement of the image converter mount (32).

3. Image capture device according to Claim 1 or 2, wherein the lens device (12) is attached to the objective-side carrier arrangement (22) by means of a lens mount (26), wherein the lens device (12) and the objective-side carrier arrangement (22) are relatively adjustable to each other, in particular by means of adjustment or/and replacement of the lens mount (26).

4. Image capture device according to one of Claims 1 to 3, wherein the image converter device (18) is attached to the first carrier element (30) by means of the assigned converter mount (32) and the lens device (12) is attached to the second carrier element (24) by means of the assigned lens mount (26).

5. Image capture device according to Claim 4, wherein the first and second carrier element (24, 30) are connected to each other by the struts (34), so that a hexapode structure is formed by the first carrier element (30), the second carrier element (24) and the struts (34).

6. Image capture device according to Claim 5, wherein the first or second carrier element (24, 30) is held immovable when using the image capture device.

7. Image capture device according to one of the preceding Claims, wherein it comprises at least one parallel kinematic motion device comprising six struts (34), wherein the struts (34) are adjustable or telescopable in length, in particular constructed as linear actuators.

8. Image capture device according to Claim 7, wherein the strut joints (33-1 to 33-6, 35-1 to 35-6) are arranged on the respective carrier elements (24, 30) in such a way that the six strut joints (33-1 to 33-6, 35-1 to 35-6) on a respective carrier element are arranged on two straights, wherein preferably two joints are positioned on a first straight (L2, L3) and four joints are positioned on a second straight (L1, L4), wherein the first and second straights are parallel to each other.

9. Image capture device according to one of the preceding Claims, wherein it comprises drives associated to the struts (34) which are operatable or controllable manually or by a control unit (64) in order to establish a length adjustment of the struts (34) along to its respective strut axis.

10. Image capture device according to one of the previous Claims, wherein:
a light-tight bellow (20) is arranged between the lens device (12) and the image converter device (18), or/and
the image converter device (18) or/and the lens device (12) is resp. are interchangeable, or/ and
the image converter device (18) is formed as a sensor, in particular CCD sensor or CMOS sensor.

11. Image capture system, including an image capture device (10) according to one of the previous Claims, at least one control unit (64), at least one display unit (66), and at least one interface device (62) for communication between the image capture device (10) and the control unit (64) or/and the display unit (66), wherein the control unit (64) or/and the display unit (66) are parts of a computer system, in particular a portable computer such as a laptop, notebook, tablet computer or smartphone, wherein in particular the interface device (62) is configured in such a way that a wireless communication link between the image capture device (10) and the control unit (64) or/and the display unit (66) can be established or is established.

12. Image capture system according to Claim 11, wherein the control of linear actuators (34) of the image capture device or/and the control of image acquisition by means of the image converter device (18) or/and the setting of the lens device (12) is carried out by means of the control unit (64) or/and by means of the display unit (66), preferably by input from a user via a related user interface, such as keyboard, mouse, touchscreen, motion sensors and the like.

## Revendications

1. Equipement d'acquisition d'image, en particulier appareil de prise de vue photographique, comprenant :
au moins un dispositif convertisseur d'image (18), qui fixe un plan d'image (BE), et au moins un équipement d'objectif (12), qui arrête un plan d'objectif (OE), dans lequel le dispositif convertisseur d'image (18) et l'équipement d'objectif (12) sont disposés de manière mobile l'un par rapport à l'autre;
au moins un arrangement de support (28) côté convertisseur associé au dispositif convertisseur d'image (18) avec un premier élément de support (30), qui définit un plan de support,
au moins un arrangement de support (22) côté objectif associé à l'équipement d'objectif (12) avec un deuxième élément de support (30), qui définit un plan de support ;
au moins un équipement de déplacement cinématique parallèle avec plusieurs entretoises (34) qui sont disposées par leurs extrémités d'entretoise (35, 36) respectives de manière articulée en le plan de support de l'arrangement de support (28) côté convertisseur et en le plan de support de l'arrangement de support (22) côté objectif, dans lequel le dispositif convertisseur d'image (18) est fixé au premier élément de support (30) et l'équipement d'objectif (12) est fixé au deuxième élément de support (24),
dans lequel dans une position de base de l'équipement d'acquisition d'image (10), le plan d'image (BE) et le plan d'objectif (OE) sont positionnés de manière parallèle l'un à l'autre de sorte qu'un axe optique (OA) s'étende de manière orthogonale au plan d'image (BE) et au plan d'objectif (OE), dans lequel l'axe optique (OA) est parallèle à une première direction principale (X) ou une deuxième direction principale (Y),
dans lequel des déplacements dans trois directions de translation et trois directions de rotation peuvent être exécutés au moyen de l'équipement de déplacement, dans lequel dans la position de base, un axe de référence d'entretoise (SA) résulte des centres de référence du premier élément de support (30) et du deuxième élément de support (24) qui est parallèle à la première direction principale (X) ou à la deuxième direction principale (Y) ou à une troisième direction principale (Z),
**caractérisé en ce que** le dispositif convertisseur d'image (18) et l'équipement d'objectif (12) sont disposés de telle manière en l'arrangement de support (28) côté convertisseur et l'arrangement de support (22) côté objectif que dans la position de base, l'axe optique (OA) soit parallèle à l'axe de référence d'entretoise (SA) et présente un espacement axial (AA) par rapport à l'axe de référence d'entretoise (SA), dans lequel l'espacement (AA) est parallèle à la direction principale (Z) qui est orthogonale à l'axe optique (OA) et à l'axe de référence d'entretoise (SA), ou/et l'axe optique (OA) est orienté orthogonalement à l'axe de référence d'entretoise (SA) concerné.

2. Equipement d'acquisition d'image selon la revendication 1, dans lequel le dispositif convertisseur d'image (18) est fixé au moyen d'une fixation de convertisseur d'image (32) à l'arrangement de support (28) côté convertisseur, dans lequel le dispositif convertisseur d'image (18) et l'arrangement de support (28) côté convertisseur peuvent être ajustés l'un par rapport à l'autre, en particulier au moyen d'un ajustement et/ou d'un remplacement de la fixation de convertisseur d'image (32).

3. Equipement d'acquisition d'image selon la revendication 1 ou 2, dans lequel l'équipement d'objectif (12) est fixé au moyen d'une fixation d'objectif (26) à l'arrangement de support (22) côté objectif, dans lequel l'équipement d'objectif (12) et l'arrangement de support (22) côté objectif peuvent être ajustés l'un par rapport à l'autre, en particulier au moyen d'un ajustement et/ou d'un remplacement de la fixation d'objectif (26).

4. Equipement d'acquisition d'image selon l'une des revendications 1 à 3, dans lequel le dispositif convertisseur d'image (18) est fixé au moyen de la fixation de convertisseur (32) associée au premier élément de support (30) et l'équipement d'objectif (12) est fixé au moyen de la fixation d'objectif (26) associée au deuxième élément de support (24).

5. Equipement d'acquisition d'image selon la revendication 4, dans lequel le premier et le deuxième élément de support (24, 30) sont reliés entre eux au moyen des entretoises (34) de sorte qu'une structure hexapode soit formée du premier élément de support (30), du deuxième élément de support (24) et des entretoises (34) .

6. Equipement d'acquisition d'image selon la revendication 5, dans lequel le premier ou le deuxième élément de support (24, 30) est fixe lors de l'utilisation de l'équipement d'acquisition d'image.

7. Equipement d'acquisition d'image selon l'une des revendications précédentes, dans lequel l'au moins un équipement de déplacement cinématique parallèle comprend six entretoises (34), dans lequel les entretoises (34) peuvent être ajustées ou sont télescopiques dans leur longueur, en particulier sont réalisées sous la forme d'actionneurs linéaires.

8. Equipement d'acquisition d'image selon la revendication 7, dans lequel les articulations d'entretoise (33-1 à 33-6, 35-1 à 35-6) sont disposées en les éléments de support (24, 30) concernés de telle manière que les six articulations d'entretoise (33-1 à 33-6, 35-1 à 35-6) soient disposées en un élément de support respectif sur deux droites, dans lequel de préférence deux articulations se situent sur une première droite (L2, L3) et quatre articulations se situent sur une deuxième droite (L1, L4), dans lequel la première et la deuxième droite sont parallèles l'une à l'autre.

9. Equipement d'acquisition d'image selon l'une des revendications précédentes, dans lequel il comprend en outre des entraînements associés aux entretoises (34) qui sont actionnables ou pilotables manuellement ou par une unité de commande (64) pour entraîner un ajustement longitudinal des entretoises (34) le long de leur axe d'entretoise respectif.

10. Equipement d'acquisition d'image selon l'une des revendications précédentes, dans lequel :
un soufflet (20) étanche à la lumière est disposé entre l'équipement d'objectif (12) et le dispositif convertisseur d'image (18), et/ou
le dispositif convertisseur d'image (18) et/ou l'équipement d'objectif (12) peut ou peuvent être remplacés, et/ou
le dispositif convertisseur d'image (18) est réalisé sous la forme d'un capteur, en particulier d'un capteur CCD ou d'un capteur CMOS.

11. Système d'acquisition d'image comprenant un équipement d'acquisition d'image (10) selon l'une des revendications précédentes, au moins une unité de commande (64), au moins une unité d'affichage (66) et au moins un équipement d'interface (62) servant à la communication entre l'équipement d'acquisition d'image (10) et l'unité de commande (64) et/ou l'unité d'affichage (66), dans lequel l'unité de commande (64) et/ou l'unité d'affichage (66) font partie d'un système informatique, en particulier d'un ordinateur portatif tel qu'un laptop, un notebook, une tablette ou un téléphone intelligent, dans lequel en particulier l'équipement d'interface (62) est mis au point de telle manière qu'une liaison de communication sans fil peut être ou est établie entre l'équipement d'acquisition d'image (10) et l'unité de commande (64) et/ou l'unité d'affichage (66).

12. Système d'acquisition d'image selon la revendication 11, dans lequel le pilotage d'actionneurs linéaires (34) de l'équipement d'acquisition d'image et/ou le pilotage d'un enregistrement d'image au moyen du dispositif convertisseur d'image (18) et/ou le réglage de l'équipement d'objectif (12) sont effectués au moyen de l'unité de commande (64) et/ou de l'unité d'affichage (66), de préférence par des entrées d'un utilisateur par l'intermédiaire d'une interface d'utilisateur associée, telle que par exemple un clavier, une souris, un écran tactile, des capteurs de mouvement et similaires.
